(19) Europäisches Patentamt

European Patent Office

Office européen des brevets

(11) **EP 1 049 022 A2**

(12) **EUROPÄISCHE PATENTANMELDUNG**

(43) Veröffentlichungstag:
02.11.2000  Patentblatt 2000/44

(51) Int. Cl.⁷: **G06F 13/42**

(21) Anmeldenummer: **00106681.0**

(22) Anmeldetag: **29.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.04.1999 DE 19919325**

(71) Anmelder: **Tenovis GmbH & Co. KG**
**60362 Frankfurt (DE)**

(72) Erfinder:
• **Maier, Klaus**
**61231 Bad Nauheim (DE)**
• **Weisenburger, Alfons**
**63225 Langen (DE)**

(54) **Bussystem und Client für solches Bussystem**

(57) Zur Beschleunigung der maximalen Taktrate in einem Bussystem wird vorgeschlagen, einen Client (6), der eine Steuerschaltung zum Erzeugen eines Steuersignals für das gesamte Bussystem besitzt, mit einem von dem Ausgang (8,11) für das Steuersignal getrennten Eingang (17,12) zu versehen und einer Funktionsgruppe des Clients, die das Steuersignal verwendet, das auf dem Eingang (17,12) empfangene Steuersignal zuzuführen.

Fig.1

EP 1 049 022 A2

## Beschreibung

Die Erfindung betrifft einen Client für ein Bussystem sowie ein Bussystem, in dem ein derartiger Client eingesetzt wird. Unter Clients werden hier Schaltungen oder Geräte verstanden, die durch Austausch zumindest von Steuersignalen über den Bus des Bussystems in der Lage sind, die Funktionsweise eines anderen Clients zu beeinflussen oder sich in ihrer Funktionsweise von diesem beeinflussen zu lassen. Unter Steuersignalen werden hier unter anderem auch Taktsignale verstanden. Andere Steuersignale, insbesondere mit Taktsignalen synchronisierte Steuersignale, werden als Steuersignale im engeren Sinn bezeichnet. Beispiele solcher Clients sind ein Prozessor und mit ihm über einen Bus verbundene Peripheriegeräte, einzelne Prozessorbaugruppen eines Multiprozessorsystems oder, in einer Telekommunikations-Vermittlungsanlage, Schnittstellenbaugruppen, die den Datenverkehr zwischen dem Bus einerseits und an sie angeschlossenen Endgeräten oder entsprechenden Schnittstellenbaugruppen eines entfernten zweiten Busses kontrollieren, sowie eine an den Bus angeschlossene Prozessoreinheit, die die Kommunikation der Schnittstellenbaugruppen auf dem Bus sowie gegebenenfalls die Weiterleitung von Daten zu oder von einem oder mehreren entfernten Bussen verwaltet.

Die Frequenz, mit der ein solcher Bus arbeiten kann, ist durch mehrere Gesichtspunkte begrenzt. Einer davon ist die Ausbreitungsverzögerung von Signalen auf dem Bus, die bei elektrischen Leitern bei circa 5 ns/m liegt. Diese Ausbreitungsverzögerung führt dazu, daß die maximale Arbeitsfrequenz eines Busses mit dem Kehrwert seiner Länge abnimmt, denn für ein störungsfreies Zusammenarbeiten aller Clients an einem Bus muß sichergestellt sein, daß eine von einem Client herbeigeführte Pegeländerung eines Signals jeden anderen Client in einer Phase des gleichen Taktzyklus erreicht, in der er in der Lage ist, auf die Pegeländerung korrekt zu reagieren. Je länger der Bus ist, desto stärker streuen die Signallaufzeiten zwischen an den Bus angeschlossenen Clients, und desto länger muß auch diese Phase sein. Dies begrenzt die maximale Arbeitsfrequenz.

Ein weiterer Gesichtspunkt ist die parasitäre Kapazität der Busleitung sowie der daran angeschlossenen Ein- und Ausgänge der einzelnen Clients. Diese parasitäre Kapazität muß umgeladen werden, wenn ein Client versucht, eine Pegeländerung auf der Busleitung herbeizuführen. Die Geschwindigkeit, mit der dies möglich ist, ist durch den Ausgangswiderstand des betreffenden Ausgangs des Clients begrenzt, oder, falls der Client einen Offenkollektor-Ausgang hat, durch einen Vorwiderstand begrenzt, über den die Busleitung an eine Quelle eines Ruhepotentials angeschlossen ist.

## Vorteile der Erfindung

Die Erfindung schlägt zum einen einen Client für ein Bussystem vor, der mit einfachen Mitteln den Betrieb des Bussystems bei erhöhten Taktraten erlaubt. Der Vorschlag basiert auf der Überlegung, daß ein Steuersignal, das von einem Client des Bussystems erzeugt wird und Funktionsgruppen des erzeugenden Clients sowie von anderen Clients steuern soll, beim erzeugenden Client herkömmlicherweise wesentlich früher vorliegt als bei den empfangenden Clients, da es, bevor es letztere erreicht, eine Ausgangsstufe des erzeugenden Clients, eine Busleitung und eine Eingangsstufe des empfangenden Clients durchlaufen muß. Wenn das Steuersignal ein Taktsignal ist, muß die Taktperiode wesentlich länger sein als die Verzögerungszeit, die sich aus der Summe der Reaktionszeit der Ausgangsstufe, der Signallaufzeit auf dem Bus einschließlich einer zum Umladen benötigten Zeit, und der Reaktionszeit der Eingangsstufe ergibt, um Synchronisationsfehler zu vermeiden. Im Fall eines mit dem Taktsignal synchronisierten Steuersignals muß die Taktphase, in der die Clients in der Lage sein müssen, auf das Steuersignal zu reagieren, wenigstens so lang sein wie die Verzögerungszeit.

Wenn ein solches Steuersignal dem erzeugenden Client nicht intern, sondern auf dem Umweg über den Bus und einen von der Ausgangsstufe getrennten Eingang zugeführt wird, so wird es von einer Funktionsgruppe des sendenden Clients, die durch dieses Steuersignal gesteuert wird, mit einer Verzögerung empfangen, die der Summe der Reaktionszeiten der Eingangs- und Ausgangsstufen und der zum Umladen der Busleitung benötigten Zeit entspricht. Diese Reaktionszeiten brauchen daher bei der Festlegung der Taktperiode des Bussystems nicht mehr berücksichtigt zu werden. Dies erlaubt eine Verkürzung der Taktperiode und damit eine Erhöhung der Taktfrequenz.

Beispiele für ein solches Steuersignal sind das Taktsignal selbst, ein Sendesignal, mit dem der Client anzeigt, daß er Daten auf dem Bus sendet, ein Verweigerungssignal, mit dem er anzeigt, daß er an ihn gesendete Daten nicht übernehmen kann, oder ein anderes Signal, mit dem er anzeigt, daß er zum Empfang von Daten bereit ist oder daß er an ihn gesendete Daten übernommen hat.

Als Ausgangsstufe zum Ausgeben eines Steuersignals im engeren Sinn, das von verschiedenen Clients auf eine gemeinsame Leitung ausgegeben werden kann, wie etwa den oben erwähnten Bereitschafts- oder Verweigerungssignalen, auf einen Bus werden häufig Offenkollektorschaltungen eingesetzt. Diese haben einen hochohmigen Zustand, in dem sie ein hohes Potential einer angeschlossenen Leitung nicht beeinflussen, und einen niederohmigen Zustand, in dem sie dieses Potential auf einen veränderten Pegel ziehen. Die Verzögerung, mit der eine solche Leitung nach Übergang einer Offenkollektorschaltung in den hochohmigen Zustand zu ihrem hohen Potential zurückkehrt, hängt ab vom Innenwiderstand einer Spannungsquelle, die das hohe Potential liefert und der parasitären Kapazität der an die Leitung angeschlossenen Clients. Um den Übergang der Leitung zum hohen Potential zu beschleunigen, ist bei einem erfindungsgemäßen Client vorgesehen, daß dessen Ausgangsstufe zusätzlich einen Treiber zum aktiven Ausgeben des hohen Potentials auf den Ausgang umfaßt.

Um zu verhindern, daß es zu Kurzschlüssen zwischen dem Treiber und einer Offenkollektorschaltung eines anderen, an den gleichen Bus angeschlossenen Clients kommt, ist vorgesehen, daß die Ausgangsstufe durch ein Taktsignal gesteuert ist und daß die Offenkollektorschaltung und der aktive Treiber ihr Ausgangssignal jeweils zu bestimmten Phasen des Taktsignals ändern. Insbesondere ist vorgesehen, daß der Treiber jeweils nur während eines Teils einer Taktperiode das hohe Potential ausgibt, um das Ausgabesignal der Ausgangsstufe möglichst schnell zu verändern, spätestens nachdem das hohe Potential auf der Leitung erreicht ist, kann der Treiber jedoch wieder inaktiv werden.

Eine bevorzugte Möglichkeit, Konflikte zwischen Offenkollektorschaltung und Treiber der Ausgangsstufen verschiedener Clients zu vermeiden ist, die Offenkollektorschaltung nur dann in einen niederohmigen Zustand umschalten zu lassen, wenn das Steuersignal im engeren Sinn im vorhergehenden Taktzyklus hohes Potential hatte. In dem Fall ist gewährleistet, daß ein Treiber, der möglicherweise während eines früheren Taktzyklus dazu beigetragen hat, dieses Steuersignal schnell auf hohes Potential zu bringen, inzwischen nicht mehr aktiv ist und somit nicht durch die niederohmige Offenkollektorschaltung kurzgeschlossen werden kann.

Insbesondere bei komplex aufgebauten Clients mit mehreren Datenquellen und einem Multiplexer zum Auswählen einer der Datenquellen und zum Ausgeben von Daten aus der ausgewählten Quelle auf den Bus können die Reaktionszeiten verringert und folglich höhere Taktraten erreicht werden, wenn zwischen dem Multiplexer und dem Bus eine Registerlogik angeordnet ist, die die auszugebenden Daten zwischenspeichert. Beispiel für einen solchen Client ist insbesondere eine Schnittstelleneinheit einer Telekommunikationsanlage, die an eine Mehrzahl von Endgeräten oder entfernten Schnittstellen angeschlossen ist und in der Lage sein muß, von diesen Endgeräten oder Schnittstellen empfangene Daten wahlweise auf den Bus auszugeben. Eine solche Schnittstelleneinheit empfängt in einem ersten Buszyklus eine Adresse einer ihrer Quellen, von der Daten auf den Bus ausgegeben werden sollen, und gibt in ein oder mehreren folgenden Buszyklen diese Daten aus. Der Zeitpunkt der Ausgabe ist durch eine gegebene Phasenbeziehung zum Taktsignal bestimmt. Um den Zeitverlust zu vermeiden, der im Anschluß an den Empfang einer Aufforderung des Taktsignals mit dem Aktivieren der Datenquellen und dem Durchschalten der Daten durch den Multiplexer verbunden ist, wird zwischen dem Multiplexer und dem Bus eine Registerlogik zum Zwischenspeichern der auszugebenden Daten vorgesehen. Diese kann durch die empfangene Adresse in einem früheren Buszyklus spezifizierte Daten aufnehmen und, wenn der Zyklus für ihre Ausgabe auf den Bus gekommen ist, in kürzester Zeit ausgeben.

Eine funktionsgleiche Registerlogik kann für die Ausgabe eines Steuersignals auf den Bus zwischen einer Steuerschaltung des Clients und dem Bus angeordnet sein.

Des weiteren wird ein Bussystem für einen Client der oben beschriebenen Art vorgeschlagen, bei dem eine Steuersignalleitung des Bussystems mit Wellenwiderstand abgeschlossen und mit einem Steuersignalausgang des Clients über einen an den Wellenwiderstand angepaßten Treiber verbunden ist. Durch diese Maßnahme werden Verzögerungen der Steuersignalleitung durch Umladen vermieden, die bis zu 100 x größer sein können als die reine Signallaufzeit der Leitung. Außerdem können dann für den Client preiswerte ASICs verwendet werden, die solche Treiber nicht enthalten können.

Dabei sollte zweckmäßigerweise auch der Steuersignal-Eingang des das Steuersignal erzeugenden Clients an den Ausgang des Treibers angeschlossen sein, so daß eine Signalverzögerung durch den Treiber sich auch auf das von dem Client rückempfangene Steuersignal auswirkt.

Vorzugsweise besitzt die Steuersignalleitung wenigstens zwei Äste und der Ausgang des Clients zum Senden des Steuersignals ist an einen Verbindungspunkt der Äste angeschlossen. Diese Anordnung ist besonders zweckmäßig, wenn es sich um ein Steuersignal handelt, das nur von einem der verschiedenen Clients des Bussystems erzeugt wird, zum Beispiel ein Taktsignal. Um die Laufzeiten des Steuersignals so kurz wie möglich zu halten, sind vorzugsweise beide Äste gleich lang.

Die Kapazität eines solchen Astes ist kleiner, vorzugsweise halb so groß wie die der gesamten Leitung. Wenn jedem Ast ein eigener Treiber zugeordnet ist, lassen sich Verzögerungen auf der Leitung aufgrund dieser Kapazität wirksam verringern, auch dann, wenn kein Abschluß mit Wellenwiderstand vorgesehen ist.

Bei einer bevorzugten Ausgestaltung umfaßt das Bussystem mehrere Clients, und eine Steuerleitung umfaßt eine an den Ausgang mehrerer Clients angeschlossene Sendeader und eine an den Eingang der Clients angeschlossene Empfangsader sowie ein logisches Gatter, das am Verbindungspunkt einen dominanten Zustand eines der Äste der Sendeader auf die Empfangsader überträgt. Die Kapazität einer solchen Sendeader ist geringer als die einer Steuersignalleitung, an der Ein- und Ausgänge aller Clients anliegen. Der Gewinn an Schnelligkeit, der durch diese Aufteilung in Sende- und Empfangsader erreicht werden kann, ist deutlich größer als der Zeitverlust durch das Gatter.

Weitere Merkmale und Vorteile der Erfindung werden deutlich anhand der nachfolgenden Beschreibung von Ausführungsbeispielen.

Figur 1 zeigt einen Ausschnitt aus einem Bussystem mit zwei daran angeschlossenen Clients;

Figuren 2,2A zeigen jeweils stark schematisiert eine Ausgangsstufe eines Clients und

Figur 3 zeigt ein Blockdiagramm eines Clients.

**Beschreibung der Ausführungsbeispiele**

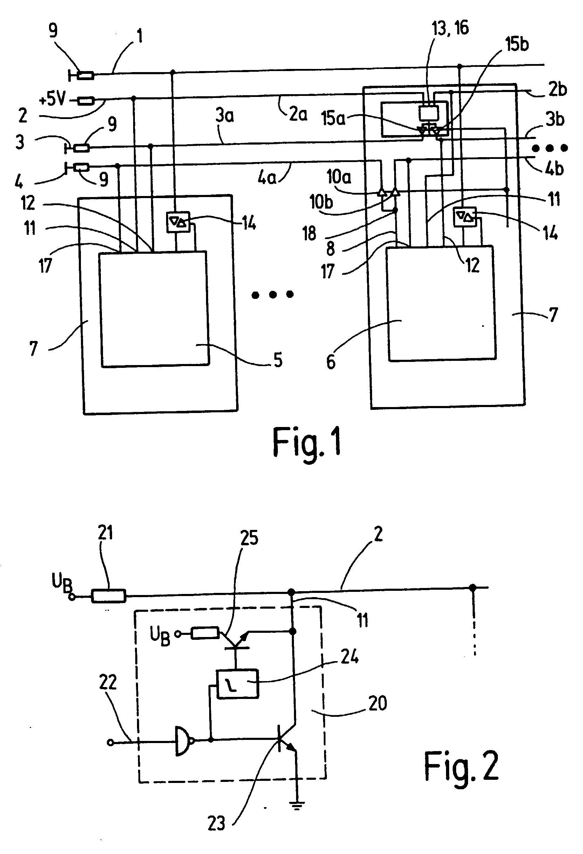

Figur 1 zeigt einen Ausschnitt aus einem Bussystem mit einem aus Datenleitungen 1 und Steuerleitungen 2, 3, 4 aufgebauten Bus und zwei an den Bus angeschlossenen Clients 5, 6. Die Clients sind jeweils auf einer Leiterplatte 7 aufgebaut, die in (nicht dargestellten) Steckplätzen einer Backplane montiert sind, auf der die Leitungen 1 bis 4 des Bus verlaufen.

Der Client 6 ist ein Masterclient, der für alle an den Bus angeschlossenen Clients 5,6 ein Taktsignal erzeugt und an einem Ausgang 8 an die Taktsignalleitung 4 ausgibt. Er ist an einem Steckplatz in der Mitte der Backplane montiert, an dem die Steuerleitungen 2, 3, 4 auf der Backplane jeweils unterbrochen sind und über die Leiterplatte 7 des Masterclients 6 geführt sind. Analog zum eingangs erläuterten Gebrauch des Begriffs „Steuersignal" werden unter „Steuerleitungen" Leitungen für Taktsignale und für Steuersignale im engeren Sinn verstanden. Jede Steuerleitung 2,3,4 zerfällt in zwei Äste, wie zum Beispiel die Äste 4a, 4b im Falle der Taktsignalleitung 4, die jeweils in einem Punkt 16 beziehungsweise 18 verbunden sind. Die Länge der zwei Äste 4a,4b ist jeweils gleich, um die Laufzeit des Taktsignals vom Masterclient 6 bis zum entferntesten Client 5 so gering wie möglich zu halten. Die Äste 4a, 4b sind an beiden Enden mit einem Wellenwiderstand 9 abgeschlossen, und dementsprechend sind auf der Leiterplatte 7 des Masterclients 6 an diesen Wellenwiderstand angepaßte niederohmige Treiber 10a, 10b parallel montiert, die jeden Ast 4a, 4b einzeln treiben. Infolge der Abschlußwiderstände 9 und der schnellen Treiber 10a, 10b sind Zeitverluste durch Umladen von parasitären Kapazitäten auf der Taktsignalleitung 4 praktisch vernachlässigbar, und die Verzögerung, mit der ein Taktsignal einen Client 5 erreicht, hängt praktisch allein von der Signallaufzeit, das heißt von der Entfernung des Clients 5 vom Masterclient 6 ab.

Neben Steuersignalen wie etwa dem Taktsignal, die nur vom Masterclient 6 erzeugt und von ihm selbst und allen anderen Clients 5 über Eingänge 17 empfangen werden, gibt es auch Steuersignale, die von einem beliebigen Client erzeugt werden und von allen anderen berücksichtigt werden müssen. Hierzu gehören zum Beispiel Signale, mit denen ein Client zu erkennen gibt, daß er Daten auf die Datenleitungen 1 ausgibt. Diese müssen von allen anderen Clients sorgfältig berücksichtigt werden, um zum Beispiel gleichzeitiges Senden mehrerer Clients auszuschließen. Herkömmlicherweise entspricht die Dauer eines Teilbereichs jeder Taktperiode, in der ein Client bereit sein muß, auf solche Signale zu reagieren, wenigstens einer Signalverzögerung von einem Ende des Busses zum anderen zuzüglich der Umladezeit, die je nach verwendeten Treibern sehr unterschiedlich sein kann.

Bei dem Bussystem aus Figur 1 hingegen sind Steuerleitungen, auf denen alle Clients des Systems senden und empfangen können, jeweils in eine Sendeader 2, an die die Ausgänge 11 der Clients 5, 6 angeschlossen sind, und eine Empfangsader 3 unterteilt, an die die Eingänge 12 der Clients für das entsprechende Steuersignal angeschlossen sind. Die zwei Äste 2a, 2b der Sendeader sind an Eingänge eines Oder-Gatters 13 angeschlossen, das sich auf der Leiterplatte 7 des Masterclients 6 befindet. Das Ausgangssignal des Oder-Gatters treibt über zwei schnelle Treiber 14a, 14b, die baulich den Treibern 10a, 10b entsprechen, die ebenfalls mit Wellenwiderstand abgeschlossenen Äste 3a, 3b der Empfangsader 3.

Die Kapazität, die ein Ausgang 11 bei einer Pegeländerung umladen muß, setzt sich zusammen aus der Leiterbahnkapazität des zugehörigen Astes 2a oder 2b und den Kapazitäten der daran angeschlossenen Ausgänge 11 anderer Clients. Sie beträgt also nur etwa ein Viertel der Kapazität, die eine nicht in Äste einerseits und in Sende- und Empfangsader andererseits unterteilte Leitung haben würde. Eine Zeitverzögerung beim Umladen der mit Wellenwiderstand abgeschlossenen Empfangsader 3 und des Oder-Gatters 13 ist deutlich kleiner als der auf der Sendeader 2 erzielte Geschwindigkeitszuwachs.

Eine weitere Wirkung der Aufteilung in Sende- und Empfangsader ist eine Vereinheitlichung der Verzögerungen von Steuersignalen im engeren Sinn im gesamten Bussystem. Wenn man annimmt, daß T die Laufzeit eines Signals auf der gesamten Länge des Busses ist, so erreicht ein Taktsignal vom Masterclient 6 einen Client 5 am Ende des Astes 4a der Signalleitung mit einer Verzögerung T/2. Wenn der Client 5 nach Empfang des Taktsignals eine Zeit $\delta$ benötigt, um ein Steuersignal im engeren Sinn auf der Sendeader 2a zu senden, so gelangt dieses Signal mit einer Verzögerung T + $\delta$ zum Masterclient 6 oder, genauer gesagt, zu dessen Oder-Gatter 13. Ein beliebiger dritter Client, der in geringerer Entfernung vom Masterclient 6 liegt, erhält sein Taktsignal mit einer Verzögerung T/2 - $\gamma$. Das Steuersignal des Clients 5 benötigt die gleiche Zeit T/2 - $\gamma$, um vom Oder-Gatter 13 zu diesem dritten Client zu gelangen. Die Zeitverzögerung zwischen Takt- und Steuersignal beträgt für diesen Client folglich T + $\delta$, unabhängig davon, wo er sich in dem Bussystem befindet. Dies erlaubt es, das Zeitfenster innerhalb eines jeden Taktsignals, in dem ein Client bereit sein muß, auf das Steuersignal zu reagieren, wesentlich kürzer zu wählen, so daß die von einem Client während einer Taktperiode auszuführenden Prozesse zeitlich enger verschachtelt werden können und die Taktperiode verkürzt werden kann.

Um eine solche Verkürzung der Taktperiode für die Datenübertragung auch wirksam nutzen zu können, ist jede der beispielsweise 16 Adern der Datenleitung 1 ebenfalls mit Wellenwiderstand abgeschlossen und jeder Client 5,6 ist mit einem an den Abschlußwiderstand 9 angepaßten bidirektionalen Treiber 14 für den Austausch von Daten mit der Datenleitung 1 ausgestattet.

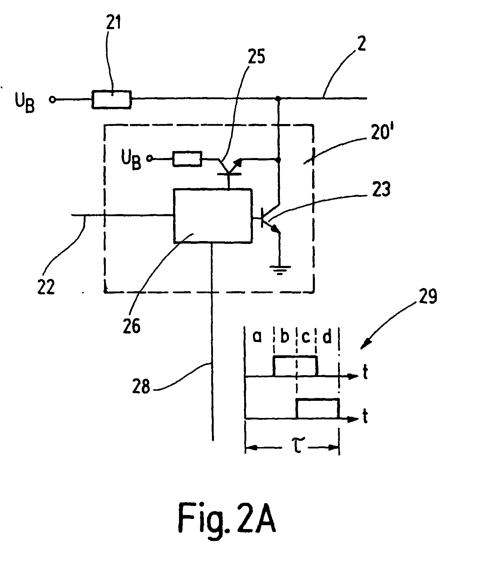

Figur 2 zeigt schematisch den Aufbau einer Ausgangsstufe 20, über die ein Client ein Steuersignal auf eine Steuerleitung, insbesondere die Sendeader 2 ausgibt. Die Sendeader 2 ist über einen Vorwiderstand 21 mit einer Versorgungsspannung $U_B$ verbunden. Wenn die Ausgangsstufen 20 aller angeschlossenen Clients hochohmig sind, nimmt die Empfangsader 2 den Wert von $U_B$ als Ruhepotential an.

Solange am Eingang 22 der Ausgangsstufe 20 hohes Potential anliegt, bleibt dieses Ruhepotential unverändert. Wenn zu einem bestimmten Zeitpunkt der Phase des Taktsignals der Client niedriges Potential auf den Eingang 22 gibt, wird der mit offenem Kollektor zwischen die Sendeader 2 und Masse geschaltete Transistor 23 niederohmig und zieht die Sendeader 2 gegen Masse. Dieser Zustand wird von allen anderen Clients des Systems erfaßt. Solange er anhält, sind sie daran gehindert, ebenfalls ihre Ausgangsstufe niederohmig zu schalten.

Wenn in einem späteren Taktzyklus der Eingang 22 auf hohen Pegel zurückkehrt, wird der Transistor 23 wieder hochohmig, gleichzeitig wird ein Monoflop 24 angestoßen, das nun für einen Bruchteil einer Taktperiode einen zweiten Transistor 25 niederohmig schaltet. Dieser gibt daraufhin aktiv hohes Potential auf die Sendeleitung 2 aus und wirkt so wie eine zum ersten Transistor 23 parallele Stromquelle, die das Aufladen aller an die Sendeleitung 2 angeschlossenen parasitären Kapazitäten beschleunigt und so die Sendeleitung 2 innerhalb wesentlich kürzerer Zeit auf ihr hohes Ruhepotential zurückbringt, als dies mit dem Vorwiderstand 21 allein möglich wäre. Somit ist es also möglich, schneller als bisher zum Beispiel ein Steuersignal bereitzustellen, das einem zweiten Client angibt, daß von dem das Steuersignal abgebenden Client auf dem Bus gesendete Daten gültig sind und übernommen werden können.

Die zeitliche Koordinierung der zwei Transistoren 23 und 25, die hier zu Beispielszwecken mit einem Monoflop 24 bewerkstelligt wird, kann auch auf beliebige andere Weise, realisiert werden. Entscheidend ist, daß die Koordinierung sicherstellt, daß die zwei Transistoren niemals gleichzeitig niederohmig sind, so daß kein Kurzschlußstrom fließen kann, der zu ihrer Zerstörung führen könnte. Eine Variante der Ausgangsstufe ist in Figur 2A gezeigt. Soweit die Elemente dieser Ausgangsstufe 20' denen der Ausgangsstufe 20 gleichen, tragen sie die gleichen Bezugszeichen und werden nicht erneut beschrieben.

Eine Steuerlogik 26 empfängt auf Leitungen 28 eine Mehrzahl N von verschränkten, insbesondere Graycodierten Taktsignalen, in diesem Fall zwei Stück, wie in dem Diagramm 29 dargestellt, die die Taktperiode der Dauer $\tau$ in $2^N$ Zeitintervalle a,b,c,d zu unterteilen erlauben. In einem dieser Teilintervalle kann die Steuerlogik 26, wenn sie am Eingang 22 ein entsprechendes Signal empfängt, den Transistor 23 von nieder- auf hochohmig umschalten und unmittelbar anschließend den Transistor 25 für die Dauer eines Teilintervalls öffnen.

Ein Kurzschluß zwischen Transistor 23 und 25 unterschiedlicher Ausgangsstufen 20 ist bei beiden Varianten dadurch ausgeschlossen, daß der Transistor 25 im wesentlichen nur solange niederohmig ist, wie erforderlich, um das Ruhepotential der Sendeader 2 wieder herzustellen, andererseits dadurch, daß ein Client seine Ausgangsstufe nur dann auf niederohmig umschalten darf, wenn die Sendeader 2 während des vorhergehenden Taktzyklus Ruhepotential innegehabt hat.

Ein besonderer Vorteil der Ausgangsstufen 20,20' ist ihre elektrische Kompatibilität mit herkömmlichen Ausgangsstufen, die einen aktiven Treiber, wie er durch den Transistor 25 gebildet ist, nicht aufweisen. Es ist deshalb möglich, Clients mit einer Ausgangsstufe nach Figur 2 oder 2A in ein bestehendes Bussystem einzubauen und dieses dadurch zu beschleunigen, ohne daß alle bisher verwendeten Clients ausgetauscht oder mit neuen Ausgangsstufen ausgestattet werden müssen. So werden die Investitionen von Betreibern in existierende Bussysteme geschützt.

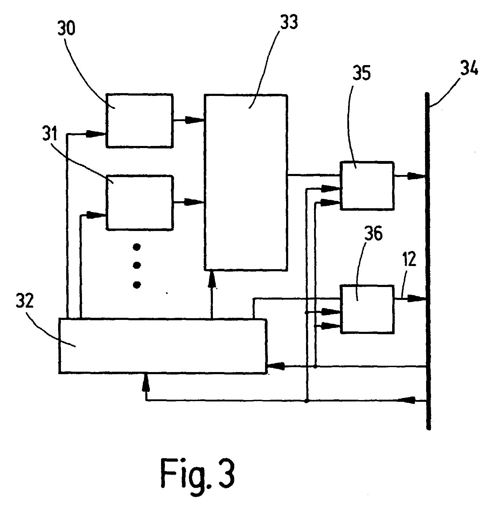

Figur 3 zeigt ein Blockdiagramm einer Schnittstelle innerhalb eines Telekommunikations-Vermittlungssystems als Beispiel für einen Bus-Client. Die Schnittstelle verfügt über eine Mehrzahl von Datenquellen 30, 31, zum Beispiel in Form von Pufferspeichern, die Daten jeweils von einem angeschlossenen Telekommunikations-Endgerät oder einer entfernten, ähnlich gearteten Schnittstelle empfangen. Eine Steuerschaltung 32 ist dem Bus 34 (in dem in dieser Figur die Leitungen 1 bis 4 zusammengefaßt sind) verbunden und empfängt im Laufe einer Taktperiode Adreßinformation, die spezifiziert, von welcher der Datenquellen 30, 31 im Folgezyklus Daten auf dem Bus 34 gesendet werden dürfen. Um die Daten auf dem Bus zu senden, muß die Steuerschaltung 32 ein Steuersignal abgeben, damit gekennzeichnet wird, daß ab jetzt Daten übertragen werden. Nach Erhalt der Adreßinformation und unabhängig vom Taktsignal auf dem Bus 34 veranlaßt die Steuerschaltung 32 einen mit ihr verbundenen Multiplexer 33, die adressierten Daten aus der ausgewählten Datenquelle 30 oder 31 an eine Registerlogik 35 anzulegen, die zwischen dem Multiplexer und dem Bus 34 angeordnet ist. Wenn das Taktsignal oder ein Steuersignal vom Bus 34 eintrifft, das das Senden der Daten gestattet, so wird dieses direkt von der Registerlogik 35 ausgewertet und die daran anliegenden Daten können in die Register übernommen und mit minimaler Verzögerung auf dem Bus bereitgestellt werden. Während der Übertragung der von der Registerlogik 35 gehaltenen Daten wird im laufenden Taktzyklus der Multiplexer bereits auf die Datenquelle umgeschaltet, der im folgenden Taktzyklus die Daten liefern soll. So läßt sich der Buszyklus um die zum Adressieren des Multiplexers 33 durch die Steuerschaltung 32 benötigte Zeit und die Reaktionszeit des Multiplexers 33 verkürzen.

Eine entsprechende Registerlogik 36 ist für die Ausgabe von Steuersignalen von der Steuerschaltung 32 auf den Bus 34 zwischen diesen beiden angeordnet.

**Patentansprüche**

1. Client für ein Bussystem mit einer Steuerschaltung zum Erzeugen eines Steuersignals, einem Ausgang zum Senden des Steuersignals auf dem Bus und mit wenigstens einer Funktionsgruppe, deren Funktion durch das Steuersignal gesteuert ist, **dadurch gekennzeichnet,** daß der Client (5,6) einen von dem Ausgang (8,11) getrennten Eingang (17,12) zum Empfangen des gleichen Steuersignals aufweist, und daß die wenigstens eine Funktionsgruppe durch das auf dem getrennten Eingang (17,12) empfangene Steuersignal gesteuert ist.

2. Client nach Anspruch 1, **dadurch gekennzeichnet,** daß das Steuersignal ein Taktsignal, ein Sendesignal, mit dem ein Client anzeigt, daß er Daten auf den Bus sendet, ein Verweigerungssignal, mit dem er anzeigt, daß er an ihn gesendete Daten nicht übernehmen kann, ein Bereitschaftssignal, mit dem er anzeigt, daß er zum Empfang von Daten bereits ist oder ein Annahmesignal ist, mit dem der Client anzeigt, daß er an ihn gesendete Daten empfangen hat.

3. Client für ein Bussystem, insbesondere nach einem der vorhergehenden Ansprüche, **dadurch gekennzeichnet,** daß er eine Ausgangsstufe (20) mit einer Offenkollektorschaltung (Transistor 23) und parallel zu dieser einem Treiber (Transistor 25) zum aktiven Ausgeben eines Ruhepotentials auf den Ausgang (8,11) umfaßt.

4. Client nach Anspruch 3, **dadurch gekennzeichnet,** daß die Ausgangsstufe (20) durch ein Taktsignal gesteuert ist und daß die Offenkollektorschaltung (23) und der Treiber (25) ihr Ausgabesignal jeweils zu bestimmten Phasen des Taktsignals ändern dürfen.

5. Client nach einem der Ansprüche 3 oder 4, **dadurch gekennzeichnet,** daß der Treiber (25) nur während eines Teils einer Taktperiode das Ruhepotential ausgibt, um den Pegel des Steuersignals auf das Ruhepotential zu bringen.

6. Client nach einem der Ansprüche 4 bis 5, **dadurch gekennzeichnet,** daß die Offenkollektorschaltung (23) nur dann in einen niederohmigen Zustand umschaltet, wenn das Steuersignal im vorhergehenden Taktzyklus auf dem Ruhepotential war.

7. Client, insbesondere nach einem der vorhergehenden Ansprüche, **dadurch gekennzeichnet,** daß er mehrere Datenquellen (30,31) und einen Multiplexer (33) zum Auswählen einer der Datenquellen (30,31) und zum Ausgeben von Daten der ausgewählten Datenquelle auf den Bus (34) in Abhängigkeit von über den Bus empfangener Steuer- und Adreßinformation umfaßt, wobei zwischen dem Multiplexer (33) und dem Bus eine Registerlogik (35) zum Zwischenspeichern der auszugebenden Daten angeordnet ist.

8. Client nach Anspruch 7, **dadurch gekennzeichnet,** daß eine Registerlogik (36) zwischen einer Steuerschaltung (32) zum Erzeugen eines Steuersignals und einem Ausgang (11) zum Senden des Steuersignals auf dem Bus zum Zwischenspeichern des auszugebenden Steuersignals angeordnet ist.

9. Bussystem mit einem Client nach einem der vorhergehenden Ansprüche, **dadurch gekennzeichnet,** daß eine Steuersignalleitung (2,3;4) über eine Treiberschaltung (10a,10b;15a,15b) mit einem Ausgang (8,11) des Client (5,6) verbunden ist.

10. Bussystem nach Anspruch 9, **dadurch gekennzeichnet,** daß die Steuersignalleitung (2) mit Wellenwiderstand (9) abgeschlossen ist.

11. Bussystem nach Anspruch 9 oder 10, **dadurch gekennzeichnet,** daß die Steuersignalleitung (2,3;4) wenigstens zwei Äste (2a,2b;3a,3b;4a,4b) umfaßt, und daß der Ausgang (8,11) an einem Verbindungspunkt (16,18) der Äste angeschlossen ist.

12. Bussystem nach Anspruch 11, **dadurch gekennzeichnet,** daß die Äste (2a,2b;3a,3b;4a,4b) gleich lang sind.

13. Bussystem nach einem der Ansprüche 11 oder 12, **dadurch gekennzeichnet,** daß der Eingang (17,12) an die Steuerleitung (2,4) in der Nähe des Verbindungspunkts (16,18) angeschlossen ist.

**14.** Bussystem nach einem der Ansprüche 11 bis 13, **dadurch gekennzeichnet,** daß jedem Ast eine eigene Treiberschaltung (10a,10b;15a,15b) zugeordnet ist.

**15.** Bussystem nach einem der Ansprüche 9 bis 13, **dadurch gekennzeichnet,** daß die Steuerleitung (2,3) eine an den Ausgang (11) mehrerer Clients (5,6) angeschlossene Sendeader (2) und eine an den Eingang (12) der Clients (5,6) angeschlossene Empfangsader(3) sowie ein logisches Gatter (13) umfaßt, das am Verbindungspunkt (16) einen dominanten Zustand eines der Äste (2b) der Sendeader (2) auf die Empfangsader (3) überträgt.

Fig.1

Fig.2

Fig. 2A

Fig. 3